# EUROPEAN PATENT SPECIFICATION

(11) **EP 1 613 144 B1**
(45) Date of publication and mention of the grant of the patent: **10.11.2010**
(21) Application number: 04723695.5
(22) Date of filing: 26.03.2004
(51) Int. Cl.: A01G 9/02, A01G 27/06

(54) **PARTITION SYSTEM**
TRENNSYSTEM
SYSTEME DE CLOISON

(30) Priority: 02.04.2003 GB 0307568
(43) Date of publication of application: 11.01.2006
(73) Proprietor: Kinsella, Leo, Co. Wicklow (IE)
(72) Inventor: Kinsella, Leo, Co. Wicklow (IE)
(74) Representative: Wingfield, Anne
(86) International application number: PCT/IE2004/000045
(87) International publication number: WO 2004/086851

(56) References cited:
- DE-A- 2 854 198
- FR-A- 2 715 269
- US-A- 5 511 342

## Description

The present invention relates to a partition system and, in particular, to modular components for forming a partition or wall for use in a garden, office or the like.

US 5511342 (Maso) discloses a self supporting modular structure comprising a plurality of flower pots each comprising a pair of container elements (41) for holding flowers joined together through a connecting channel (42) which allows irrigation liquid to pass between the container elements.

The present invention has been made in order to provide an effective wall or partition screening system, particularly for use outdoors in a garden or patio area, which is easy and convenient to assemble, is decorative and attractive and can accommodate one or more plants for aesthetic appeal.

According to the invention there is provided a partition section for forming a partition or wall comprising a central open top container having a support at each end thereof, wherein the bottom of each support is adapted to interconnect with the top of a support of a further partition section of the invention so that a plurality of such partition sections are interconnectable to form such partition or wall characterised in that the central container is adapted to hold plants and the end supports are adapted to act as reservoirs and further characterised in that an overflow channel is provided on an internal wall of each support.

Preferably, the supports are adapted such that partition sections are interconnectable at any desired angle to each other on a horizontal plane. Preferably, each support comprises a hollow body with a base defining a reservoir and a rim depending therefrom, the rim being adapted to locate within the upper edge of a support of a further partition section of the invention to form said interconnection.

Preferably, the support body is cylindrical and the rim depends from the lower edge of the body. Preferably, the rim has a smaller diameter than the upper edge of the support body.

Preferably, a recess is provided in the upper edge of the support body adjacent the container for receiving a portion of a capillary mat to facilitate water passing from the supports to the container by means of capillary action. Preferably, the overflow channels are provided on the internal walls of the support bodies.

Preferably, the container comprises a cuboid housing defined by substantially parallel side walls, a floor and the supports. Preferably, each side wall comprises a pair of apertures in the upper and lower edges thereof.

According to the invention there is further provided a modular partition system for forming a partition or wall comprising one or more partition sections of the invention, such partition sections being adapted to be interconnected to form said partition or wall. Preferably, the partition system further comprises one or more base components, reservoir components, insert components and/or roof components. Preferably, the partition system also comprises one or more liner components.

Preferably, such base components comprise a conic section having a central aperture adapted to receive the rim of a support of a partition section.

Preferably, such reservoir components comprise a hollow body with a base defining a reservoir and a rim depending therefrom, the rim being adapted to locate within the upper edge of a further reservoir component, a partition section or a base component. Preferably, an overflow channel is provided on the internal wall of the reservoir body.

Preferably, such insert components comprise a rectangular member having a pair of locating pins extending from the upper and lower edges thereof and adapted to interconnect with a partition section to form part of said partition or wall.

Preferably, such roof components comprise a cover for the container with an integral cover for the supports at each end thereof, the support covers being adapted to fit within the upper edge of the supports. Preferably, such roof components incorporate a rain channel which allows rainwater to pass through to the supports.

The invention further provides a liner component in combination with a partition section of the invention comprising a lining made from a material which provides capillary action and is adapted to fit within the container of the partition section, the liner component further comprising an open top box with a tongue at each end thereof, the tongues being adapted to extend, in use, from the upper region of the box end walls, over the container end walls and into the supports.

Preferably, the remote end of each tongue has a shaped portion which fits over the base of the support. Preferably, the liner component is formed from a planar piece of material of generally rectangular shape with extending tongues.

The invention will now be described further, by way of example only, with reference to the accompanying drawings, in which:
Fig. 1 is a perspective view of a partition section of the invention;
Fig. 2 is a plan view of the partition section of figure 1;
Fig. 3 is a front exploded view of a partition system of the invention incorporating partition sections of figure 1 and additional components;
Fig. 4 is a perspective view of a plurality of partition sections of figure 1 interconnected to form an exemplary partition system of the invention;
Fig. 5 is a plan view of a base component of the partition system of the invention;
Fig. 6 is a plan view of a reservoir component of the partition system of the invention;
Fig. 7 is a plan view of an insert component of the partition system of the invention;
Fig. 8 is a perspective view of a liner component of the partition system of the invention;
Fig. 9 is a front view of the liner component of figure 8; and
Fig. 10 is a plan view of the liner component of figure 8 in the flat, unassembled configuration.

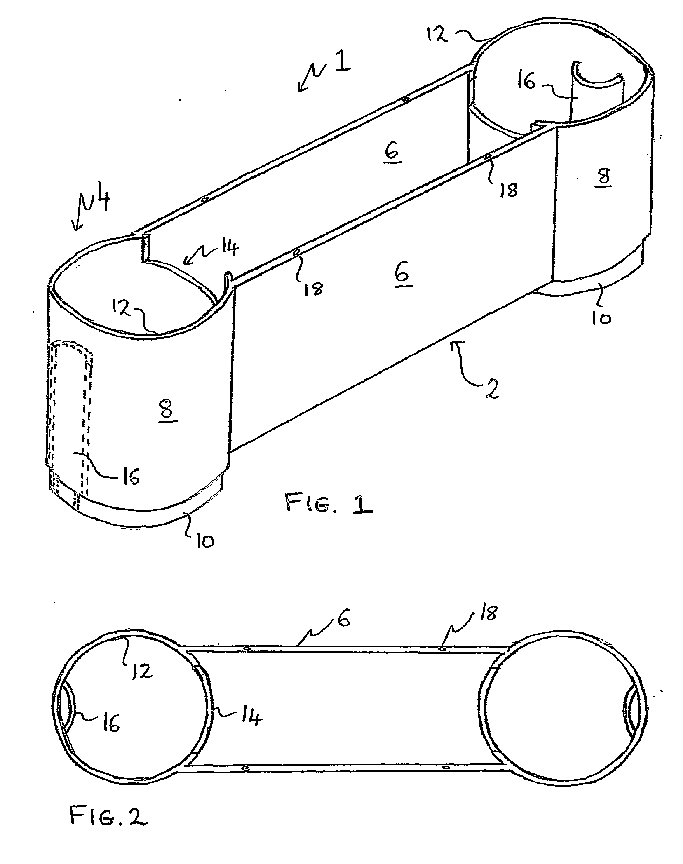

Referring to figures 1 and 2, a partition section 1 of the invention comprises a central open top container 2 having a support 4 at each end thereof. The container 2 is adapted to hold plants and the like while the supports 4 are adapted to act as water reservoirs for watering such plants.

The container 2 is defined by substantially parallel side walls 6, a floor (not shown) and the end supports 4 which form a generally cuboid housing. It will be appreciated that the container may be any suitable shape, for example a cube or the side walls 6 may be convex or concave.

Each support 4 comprises a main body 8 of generally hollow cylindrical shape with a base defining a reservoir. A rim 10 depends from the lower edge of the body. The rim 10 has a smaller diameter than the upper edge 12 of the body and is therefore adapted to locate within the upper edge of another corresponding partition section. Typically, the rim 10 and the upper edge 12 of the body are dimensioned to be a close fit so that partition sections may be interconnected easily yet securely. The edge of the rim may be bevelled to facilitate interconnection.

It will be appreciated that the supports 4 and corresponding upper edges and lower rims may have any suitable shape, for example the supports may be square in cross-section rather than circular.

At the region where the end supports 4 define the end walls of the container 2, the upper portion of the support body 8 has a recessed portion 14. An overflow channel in the form of a semicircular tube 16 is provided on the internal wall of the support body 8, typically opposite the recessed portion 14. The channel 16 extends to the lower edge of the rim 10 and opens at a region at or below the level of the recessed portion 14. The overflow channel 16 may have any suitable shape and, for example, may be in the form of an annular section formed around the internal wall of the support body 8.

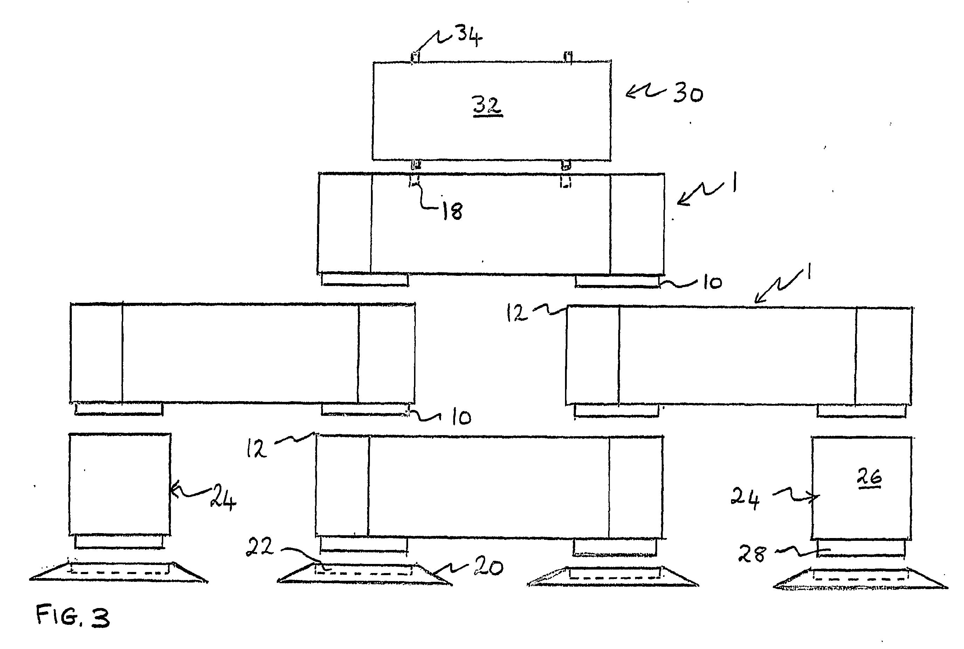

Typically, each side wall 6 comprises a pair of apertures 18 in the upper and lower edges thereof for optionally receiving the pins of an insert component as described below with reference to figure 3.

Referring to figure 3, the partition sections of figure 1 may be interconnected to form a wall or partition by locating the rims 10 of one partition section into the corresponding upper edges 12 of other partition sections.

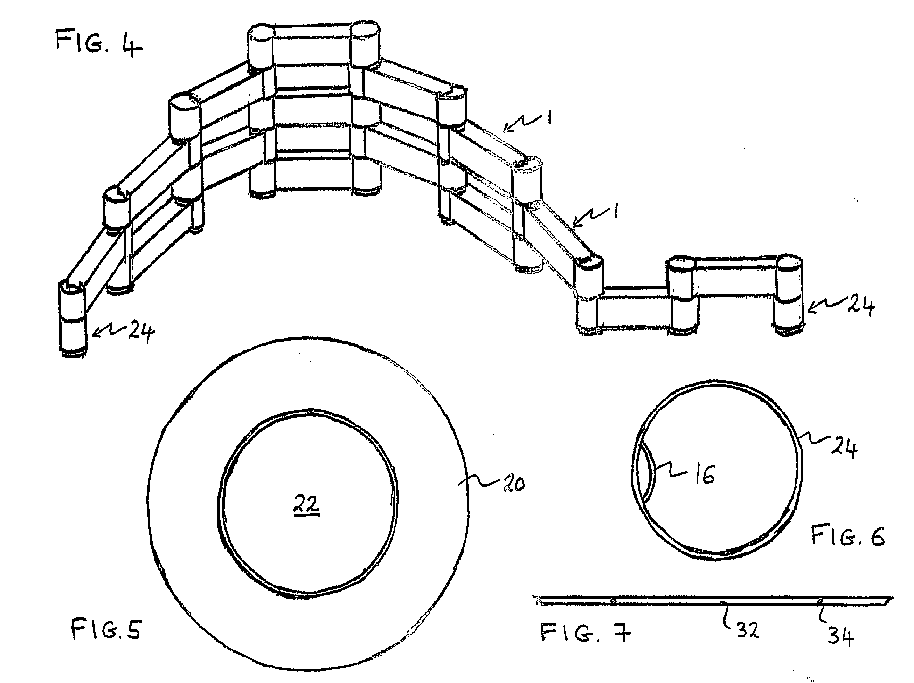

The partition system includes a base component 20, also shown in figure 5. The base component comprises a conic section having a central aperture 22 adapted to receive the rim 10 of a support 4 of a partition section 1. The flared outer sides of the base component 20 increase surface contact thereby providing improved stability to the partition system, when required. The base may be adapted to be filled with suitable ballast, such as sand or water, if required.

The partition system also includes a reservoir component 24, also shown in figure 6, which comprises a single support having similar features to those of the end support 4 described above. Thus, the reservoir component 24 comprises a main body 26 of generally hollow cylindrical shape with a base defining a reservoir and a rim 28 depending from the lower edge of the body. The rim 28 is adapted to locate within the upper edge of another reservoir component, a partition section 1 or a base component 20. An overflow channel 16, as described above, is provided on the internal wall of the reservoir body 26.

The partition system further includes an insert component 30, also shown in figure 7, which comprises a rectangular member 32 having a pair of locating pins or dowels 34 extending from the upper and lower edges thereof. Such dowels locate within the apertures 18 provided in the side walls 6 of the partition sections 1.

The insert component 30 allows an assembled partition to form a total screen, if desired. Thus, the gaps between one or more adjacent partition sections may be closed by insert components located on either side wall 6. The plants in the partition sections are not obstructed by the insert components since the latter extend behind the planting area.

Referring to figure 4, a partition, wall or screen may be built up from a plurality of interconnected partition sections 1 and optionally additional base components 20, reservoir components 24 and/or insert components 30. The modular system of the invention is flexible and allows the user to design their own layout to suit the location and desired aesthetic effect. It will be seen that, with the partition sections of the invention, the partition may include curves or angles since the cylindrical supports 4 allow adjacent partition sections to be interconnected at any desired angle to each other.

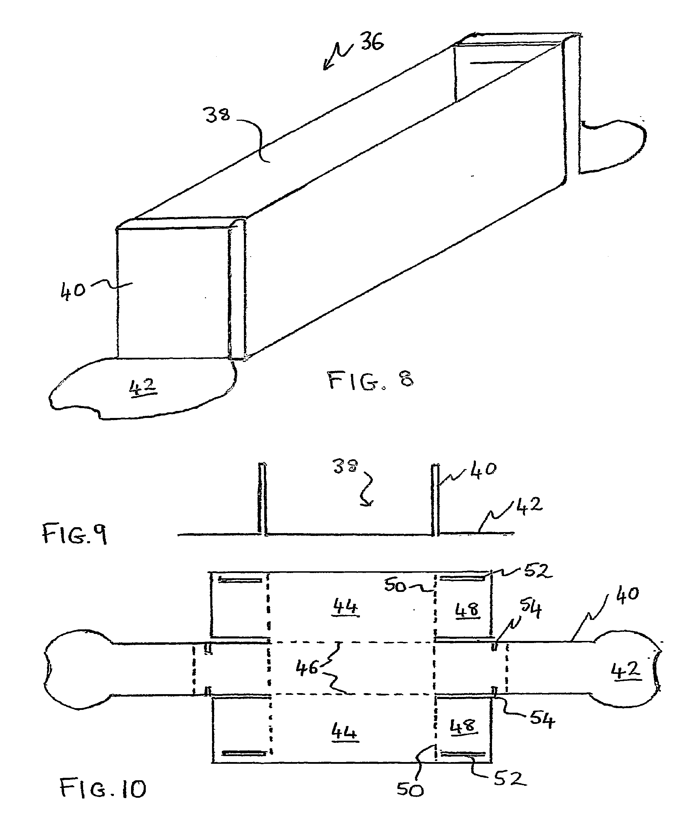

Referring to figures 8, 9 and 10, a liner component 36 of the invention comprises a lining adapted to fit within the container 2. The liner is made from a suitable material which provides capillary action, such as cloth or felt.

Figure 8 shows the shape of the liner or capillary mat assembled for fitting to the partition section 1. The assembled liner comprises an open top rectangular box 38 which fits within the container 2 and a tongue 40 at each end of the box. The tongues extend from the upper region of the box end walls and pass through the recesses 14 to hang over the container end walls thereby extending into the supports 4. The remote end of the tongue has a shaped portion 42 which fits over the base of the support 4.

Referring to figure 10, the three dimensional liner shown in figure 8 may be easily formed from a planar piece of material of generally rectangular shape with extending tongues 40. The open top box 38 is formed by folding the side walls 44 upward along the dotted lines 46 and then folding the overlapping end walls 48 inwards along the dotted lines 50 while keeping the tongues 40 inside the end walls. Each tongue 40 is then passed through the overlapping slots 52 provided in the end walls 48 so that the notches 54 provided in the tongue engage with the slots 52 to hold the box together.

It will be appreciated that the shape of the liner component 36 may be varied to correspond with any variation in shape of the container 2 and supports 4.

In use, a plurality of partition sections and other components are interconnected to form the desired layout of partition. A liner component is located within the container 2 of any partition sections within which plants are required, with the tongues 40 extending into the corresponding supports 4. Plants are planted in the box sections of the liner components.

For maintenance, water is supplied to the uppermost reservoir supports 4. The lower reservoir supports 4 are consequently filled by the water passing thereto through the overflow channels 16. Water passes from the reservoir supports 4 to the plants in the container 2 by means of capillary action via the liner component.

A roof component may be provided for covering the uppermost partition sections or reservoir components, if required. Such a roof component may comprise, for example, a cover for the container 2 with an integral cover for the supports 4 at each end thereof, the support covers being adapted to fit within the upper edge of the supports 4. The roof component may incorporate a rain channel to allow rainwater to pass through to the supports 4.

Typically, the partition section and the various components of the partition system comprise integral units. The partition section and components may be made from any suitable material, such as plastics, earthenware, terra cotta, fibreglass, timber, wood, metal, granite, stone, reconstituted stone, or carved from stone. A typical partition section may be 1 metre in length.

It will be seen that the partition sections of the invention may be assembled within a few minutes to provide a screen wall, for example on a patio, in a garden or in an office. The sections can be sold by retailers, such as garden centres, either pre-planted with suitable plants or flowers or unplanted for individual planting by the user.

The ability of the partition sections to act as planters improves the aesthetic and decorative appeal of the assembled partition and the reservoir and capillary action system minimises maintenance and watering required.

Due to the ease of assembly and the non-permanent nature of the partition, the partition wall can be easily disassembled, moved and re-designed as required.

The partition sections and components are convenient and cost effective to manufacture and stack easily on a pallet for transport and storage.

It will be appreciated that the present invention is not intended to be restricted to the details of the above embodiments, which are described by way of example only, but only by the scope of the appended claims.

## Claims

1. A partition section (1) for forming a partition or wall comprising a central open top container (2) having a support (4) at each end thereof, wherein the bottom of each support is adapted to interconnect with the top of a support of a further partition section of the invention so that a plurality of such partition sections are interconnectable to form such partition or wall **characterised in that** the central container is adapted to hold plants and the end supports are adapted to act as reservoirs and further **characterised in that** an overflow channel (16) is provided on an internal wall of each support (4).

2. A partition section according to claim 1 further **characterised in that** each support (4) comprises a hollow body (8) with a base defining a reservoir and a rim (10) depending therefrom, the rim being adapted to locate within the upper edge (12) of a support of a further partition section of the invention to form said interconnection.

3. A partition section according to any preceding claim further **characterised in that** a recess (14) is provided in the upper edge (12) of each support adjacent the container for receiving a portion of a capillary mat to facilitate water passing from the supports to the container by means of capillary action.

4. A partition section according to any preceding claim further **characterised in that** the container (2) comprises a cuboid housing defined by substantially parallel side walls (6), a floor and the supports (4).

5. A modular partition system for forming a partition or wall comprising one or more partition sections (1) according to any preceding claim, such partition sections being adapted to be interconnected to form said partition or wall.

6. A modular partition system according to claim 5 further **characterised by** comprising one or more insert components (30), such insert components comprising a rectangular member (32) having a pair of locating pins (34) extending from upper and lower edges thereof and adapted to interconnect with a partition section (1) to form part of said partition or wall.

7. A modular partition system according to any preceding claim further **characterised by** comprising one or more roof components, such roof components comprising a cover for the container with an integral cover for the supports at each end thereof, the support covers being adapted to fit within the upper edge of the supports.

8. A liner component (36) in combination with a partition section (1) according to anyone of claims 1 to 4
**characterised by** comprising a lining made from a material which provides capillary action and is adapted to fit within the container (2) of the partition section, the liner component further comprising an open top box (38) with a tongue (40) at each end thereof, the tongues being adapted to extend, in use, from the upper region of the box end walls, over the container end walls and into the supports (4).

9. A liner component (36) according to claim 8 further **characterised in that** the remote end of each tongue (40) has a shaped portion (42) which fits over the base of the support (4) and the liner component is formed from a planar piece of material of generally rectangular shape with extending tongues.

10. A modular partition system according to any of claims 5 to 7 further **characterised by** comprising one or more liner components according to claim 8 or claim 9.

## Patentansprüche

1. Abteilungsabschnitt (1) zum Ausbilden einer Abteilung oder Wand, umfassend einen mittigen, offenen oberen Behälter (2) mit einer Stütze (4) an jedem seiner Enden, wobei der Boden jeder Stütze dazu geeignet ist, sich mit der Oberseite einer Stütze eines weiteren Abteilungsabschnitts der Verbindung zu verbinden, sodass mehrere derartige Abteilungsabschnitte zum Ausbilden einer Abteilung oder Wand miteinander verbindbar sind, **dadurch gekennzeichnet, dass** der mittige Behälter dazu geeignet ist, Pflanzen zu halten, und die Endstützen dazu geeignet sind, als Sammelbecken zu wirken, und ferner **dadurch gekennzeichnet, dass** ein Überlaufkanal (16) an einer Innenwand jeder Stütze (4) vorgesehen ist.

2. Abtellungsabschnitt nach Anspruch 1, ferner **dadurch gekennzeichnet, dass** jede Stütze (4) einen Hohlkörper (8) mit einer Basis, die ein Sammelbecken definiert, und einen Rand (10) umfasst, der davon abhängt, wobei der Rand dazu geeignet ist, innerhalb der Oberkante (12) einer Stütze eines weiteren Abteilungsabschnitts der Erfindung zum Ausbilden der Verbindung miteinander angeordnet zu sein.

3. Abteilungsabschnitt nach einem der vorhergehenden Ansprüche, ferner **dadurch gekennzeichnet, dass** eine Aussparung (14) in der Oberkante (12) jeder Stütze dem Behälter benachbart zum Aufnehmen eines Abschnitts einer Kapillarmatte zum Ermöglichen, dass Wasser mittels Kapillarwirkung von den Stützen zum Behälter läuft, vorgesehen ist.

4. Abteilungsabschnitt nach einem der vorhergehenden Ansprüche, ferner **dadurch gekennzeichnet, dass** der Behälter (2) ein quaderförmiges Gehäuse umfasst, das durch im Wesentlichen parallele Seitenwände (6), einen Boden und die Stützen (4) definiert ist.

5. Modulares Abteilungssystem zum Ausbilden einer Abteilung oder Wand, umfassend einen oder mehr Abteilungsabschnitte (1) nach einem der vorhergehenden Ansprüche, wobei derartige Abteilungsabschnitte dazu geeignet sind, zum Ausbilden der Abteilung oder Wand miteinander verbunden zu sein.

6. Modulares Abteilungssystem nach Anspruch 5, ferner **dadurch gekennzeichnet, dass** es ein oder mehr Einsatzbauteile (30) umfasst, wobei derartige Einsatzbauteile ein rechteckiges Glied (32) mit einem Paar Passstifte (34) umfassen, die sich von Ober- und Unterkanten davon erstrecken und dazu geeignet sind, mit einem Abteilungsabschnitt (1) verbunden zu sein, um ein Teil der Abteilung oder Wand zu bilden.

7. Modulares Abteilungssystem nach einem der vorhergehenden Ansprüche, ferner **dadurch gekennzeichnet, dass** es ein oder mehr Dachbauteile umfasst, wobei derartige Dachbauteile eine Abdeckung für den Behälter mit einer einstückigen Abdeckung für die Stützen an jedem Ende davon umfassen, wobei die Stützeriabdeckungen dazu geeignet sind, in die Oberkante der Stützen zu passen.

8. Auskleidungsbauteil (36) in Kombination mit einem Abteilungsabschnitt (1) nach einem der Ansprüche 1 bis 4, **dadurch gekennzeichnet, dass** es eine Einlage aus einem Material umfasst, das Kapillarwirkung vorsieht, und dazu geeignet ist, in den Behälter (2) des Abteilungsabschnitts zu passen, wobei das Auskleidungsbauteil ferner einen offenen oberen Kasten (38) mit einer zunge (40) an jedem Ende davon umfasst, wobei die Zungen dazu geeignet sind, im Gebrauch vom oberen Bereich der Kastenendwende über die Behälterendwande und in die Stützen (4) hinein zu verlaufen.

9. Auskleidungsbauteil (36) nach Anspruch 8, ferner **dadurch gekennzeichnet, dass** das entfernte Ende jeder Zunge (40) einen ausgeformten Abschnitt (42) aufweist, der über die Basis der Stütze (4) passt, und das Auskleidungsbauteil aus einem flachen Materialstück mit im Allgemeinen rechteckiger Form mit ausgestreckten Zungen ausgebildet ist.

10. Modulares Abteilungssystem nach einem der Ansprüche 5 bis 7, ferner **dadurch gekennzeichnet, dass** es ein oder mehr Auskleidungsbauteile nach Anspruch 8 oder Anspruch 9 umfasst.

## Revendications

1. Section de cloison (1) destinée à former une cloison ou un mur, comprenant un conteneur central ouvert sur le dessus (2), possédant un support (4) à chaque extrémité de celui-ci, dans laquelle le pied de chaque support est adapté pour être interconnecté avec le haut d'un support d'une autre section de cloison de l'invention, de sorte que plusieurs de ces sections de cloison peuvent être interconnectées pour former une telle cloison ou un tel mur, **caractérisée en ce que** le conteneur central est adapté pour contenir des plantes, et les supports d'extrémité sont adaptés pour agir comme des réservoirs, et en outre **caractérisée en ce qu'**un canal de trop-plein (16) est prévu sur une paroi intérieure de chaque support (4).

2. Section de cloison selon la revendication 1, en outre **caractérisée en ce que** chaque support (4) comprend un corps creux (8) avec une base définissant un réservoir et un bord (10) dépendant de celui-ci, le bord étant adapté pour se trouver à l'intérieur du bord supérieur (12) d'un support d'une autre section de cloison de l'invention, pour former ladite interconnexion.

3. section de cloison selon l'une quelconque des revendications précédentes, en outre **caractérisée en ce qu'**un évidement (14) est prévu dans le bord supérieur (12) de chaque support adjacent au conteneur, pour recevoir une portion d'un tapis capillaire, afin de faciliter l'écoulement de l'eau entre les supports et le conteneur au moyen d'une action capillaire.

4. Section de cloison selon l'une quelconque des revendications précédentes, en outre **caractérisée en ce que** le conteneur (2) comprend un logement cuboïde défini par des parois latérales (6) substantiellement parallèles, un plancher et les supports (4).

5. Système de cloison modulaire, destiné à former une cloison ou un mur, comprenant une ou plusieurs sections de cloison (1) selon l'une quelconque des revendications précédentes, ces sections de cloison étant adaptées pour être interconnectées afin de former ladite cloison ou ledit mur.

6. Système de cloison modulaire selon la revendication 5, en outre **caractérisé en ce qu'**il comprend un ou plusieurs composants d'insert (30), ces composants d'insert comprenant un membre rectangulaire (32) possédant une paire de goujons de positionnement (34) s'étendant depuis les bords supérieurs et inférieurs de celui-ci et adaptés pour être interconnectés avec une section de cloison (1) afin de former une partie de ladite cloison ou dudit mur.

7. Système de cloison modulaire selon l'une quelconque des revendications précédentes, en outre **caractérisé en ce qu'**il comprend un ou plusieurs composants de toit, ces composants de toit comprenant un couvercle pour le conteneur, avec un couvercle intégral pour les supports à chaque extrémité de ceux-ci, les couvercles de support étant adaptés pour être montés dans le bord supérieur des supports.

8. Composant de revêtement (36) en combinaison avec une section de cloison (1) selon l'une quelconque des revendications 1 à 4, **caractérisé en ce qu'**il comprend un revêtement réalisé à partir d'un matériau fournissant une action capillaire et adapté pour être placé à l'intérieur du conteneur (2) de la section de cloison, le composant de revêtement comprenant en outre une boîte ouverte sur le dessus (38), avec une langue (40) à chaque extrémité de celle-ci, les langues étant adaptées pour s'étendre à partir de la région supérieure des parois terminales de la boîte, par-dessus les parois terminales du conteneur et dans les supports (4), pendant l'utilisation.

9. Composant de revêtement (36) selon la revendication 8, en outre **caractérisé en ce que** l'extrémité éloignée de chaque langue (40) possède une portion profilée (42) apte à être placée par-dessus la base du support (4), et le composant de revêtement est formé à partir d'une pièce planaire d'un matériau présentant généralement une forme rectangulaire, avec des langues étendues.

10. Système de cloison modulaire selon l'une quelconque des revendications 5 à 7, en outre **caractérisé en ce qu'**il comprend un ou plusieurs composants de revendication revêtement selon la revendication 8 ou la revendication 9.
